Europäisches Patentamt

European Patent Office

Office européen des brevets

(19)

(11) **EP 1 007 976 B1**

(12) **FASCICULE DE BREVET EUROPEEN**

(45) Date de publication et mention
de la délivrance du brevet:
**08.01.2003 Bulletin 2003/02**

(21) Numéro de dépôt: **96912074.0**

(22) Date de dépôt: **05.04.1996**

(51) Int Cl.⁷: $G01P\ 3/44$, $G01P\ 7/00$

(86) Numéro de dépôt international:
**PCT/FR96/00522**

(87) Numéro de publication internationale:
**WO 96/031783 (10.10.1996 Gazette 1996/45)**

(54) **PROCEDE DE MESURE DE LA VITESSE DE LACET D'UN VEHICULE**

VERFAHREN ZUM MESSEN DER GIERGESCHWINDIGKEIT EINES FAHRZEUGES

METHOD FOR MEASURING THE YAW VELOCITY OF A VEHICLE

(84) Etats contractants désignés:
**BE DE ES GB IT**

(30) Priorité: **07.04.1995 FR 9504156**

(43) Date de publication de la demande:
**14.06.2000 Bulletin 2000/24**

(73) Titulaire: **Renault s.a.s.**
**92100 Boulogne Billancourt (FR)**

(72) Inventeur: **CONSTANCIS, Pierre**
**F-78300 Poissy (FR)**

(56) Documents cités:
**EP-A- 0 621 482       DE-A- 4 323 314**
**DE-U- 29 501 404      FR-A- 2 702 570**

## Description

La présente invention se rapporte à la mesure de la vitesse de lacet d'un véhicule, notamment en vue de prévoir sa trajectoire.

La vitesse de lacet d'un véhicule peut être évaluée de la façon la plus simple à l'aide d'un gyromètre, ou à partir de sa vitesse longitudinale et de son angle volant.

Par la publication FR 2.702.570, au nom de la demanderesse, on connaît un procédé de détection et de sélection d'obstacles risquant d'entrer en collision avec un véhicule, dit véhicule suiveur. Le procédé décrit dans cette publication utilise un télémètre à balayage horizontal, pour déterminer le rayon de courbure et la vitesse angulaire du véhicule suiveur, ainsi qu'un odomètre pour mesurer sa vitesse longitudinale. Sur la base de ces mesures, le dispositif mis en oeuvre estime le danger d'une collision entre le véhicule suiveur et un obstacle sélectionné, en comparant leurs trajectoires respectives.

La mesure de vitesse angulaire opérée selon la publication FR 2.702.570 à partir des mesures effectuées par un télémètre à balayage horizontal est précise. Cependant, elle n'est pas permanente, puisqu'elle suppose qu'un obstacle ait été détecté et sélectionné. Par ailleurs, cette mesure est entachée d'imprécisions, liées à la présence d'autres obstacles sélectionnables, dans le champ du télémètre.

La présente invention vise à obtenir en permanence une mesure aussi précise que possible de la vitesse angulaire d'un véhicule.

Elle concerne un procédé de mesure de la vitesse de lacet d'un véhicule. Ce procédé est caractérisé en ce que l'évolution de ladite vitesse effectuée en permanence par un organe embarqué est recalée ponctuellement à l'aide d'indications correspondant respectivement à la vitesse longitudinale du véhicule à sa distance longitudinale par rapport à un obstacle fixe présent sur sa trajectoire, et à la vitesse transversale relative du même obstacle fixe par rapport au véhicule.

Selon un mode de réalisation préférentiel de l'invention, Dl et Vt sont indiquées par un télémètre à balayage horizontal, en cas de détection d'un obstacle fixe sur la trajectoire du véhicule.

Conformément à l'invention, la vitesse de lacet du véhicule peut être évaluée par un capteur d'angle volant.

L'invention propose également d'effectuer directement cette évaluation à l'aide d'un gyromètre embarqué indiquant la vitesse de lacet instantanée du véhicule.

Pour opérer le recalage de la vitesse angulaire, il est notamment prévu d'exploiter les mesures de Dl, Vl et Vt effectuées par le télémètre, pour en déduire la courbure de trajectoire $\kappa$ du véhicule.

Dans ce cas, la valeur de la courbure $\kappa$ ainsi déterminée peut avantageusement être exploitée pour recaler la valeur de l'écart à l'origine b de l'angle volant.

D'autres caractéristiques et avantages de l'invention apparaîtront clairement à la lecture de la description suivante d'un mode de réalisation particulier de l'invention, en liaison avec les dessins annexés, sur lesquels :

- la figure 1 représente schématiquement un véhicule automobile équipé d'organes de détection et de mesure permettant la mise en oeuvre de l'invention, et

- la figure 2 précise la nature des mesures intervenant dans sa mise en oeuvre.

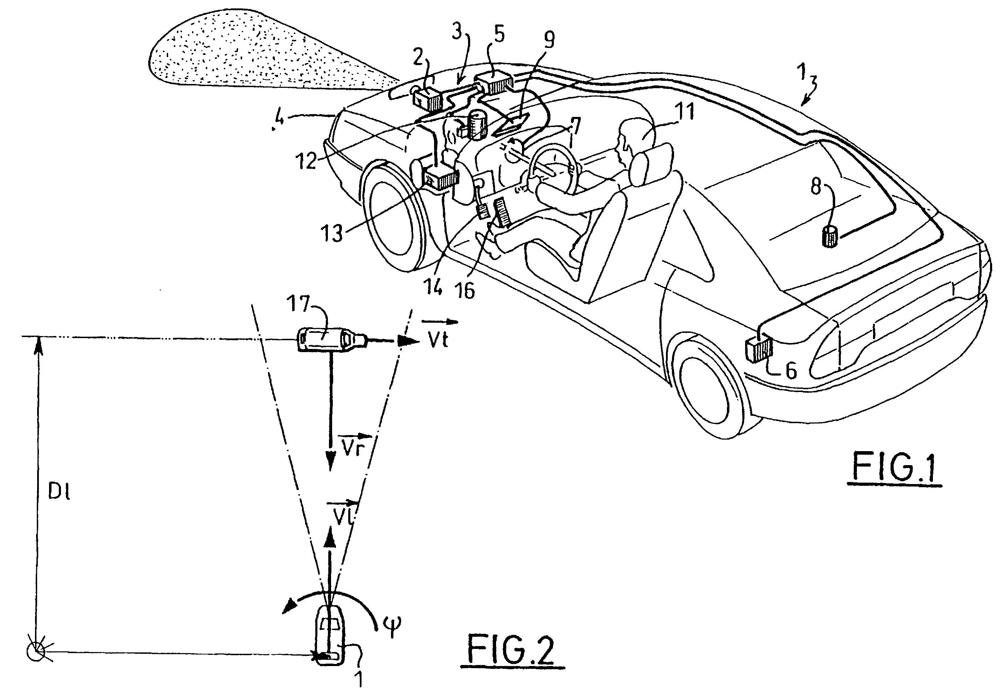

Sur la figure 1 on a indiqué la présence à bord du véhicule 1 d'un appareil de détection d'obstacles 2 tel qu'un télémètre à laser infrarouge du type L.I.D.A.R. (Light Detecting And Ranging) disposé dans la partie centrale du bloc avant 3. Bien entendu, l'utilisation du L.I.D.A.R. central n'a aucun caractère exclusif, et on peut tout aussi bien envisager d'utiliser d'autres types de détecteurs d'obstacles ou d'intégrer le détecteur dans un des deux blocs optiques 4 du véhicule, sans sortir du cadre de l'invention. Un calculateur 5 reçoit les informations de retour du télémètre 2, notamment lorsque celui-ci a détecté un obstacle sur la trajectoire du véhicule, ainsi que les signaux émis par un capteur de vitesse longitudinale du véhicule 6 tel qu'un capteur de roues du système A.B.S (Anti-Blokierung-System) ou tout autre capteur de vitesse du véhicule, par un capteur d'angle volant 7 ou par un gyromètre 8 indiquant la vitesse de lacet du véhicule. Cette installation, complétée éventuellement par un afficheur tête haute 9 grâce auquel le conducteur 11 peut disposer d'un signal visuel d'alerte dans son champ de vision habituel, permet de façon connue en soi, de détecter les obstacles présents sur la trajectoire du véhicule, de sélectionner parmi ces derniers certains obstacles particulièrement dangereux en comparant leur vitesse longitudinale relative (cf figure 2) avec la vitesse longitudinale Vl du véhicule, et d'assurer le contrôle en distance du véhicule par rapport à certains obstacles sélectionnés, tels que des véhicules roulant sur la même voie de circulation, en agissant directement sur l'organe de contrôle du papillon des gaz 12, et/ou sur le boîtier de contrôle de la boîte de vitesses automatique 13, et sur les pédales d'accélération de freinage 14, 16.

La figure 2 met en évidence les indicateurs qui sont pris en considération pour définir la trajectoire d'un véhicule 1 par rapport à un obstacle 17 détecté dans le champ d'observation d'un télémètre. Le véhicule se déplace avec une vitesse longitudinale Vl évaluée par le capteur de vitesse 6 mentionné ci-dessus, et orientée vectoriellement en direction de l'obstacle 17, dans l'hypothèse ou l'obstacle en question est suffisamment éloigné du véhicule. Par ailleurs il possède une vitesse de lacet $\dot{\Psi}$ liée à la courbure de sa trajectoire $\kappa$ et à la vitesse longitudinale Vl par la relation

$$\kappa = \frac{\dot{\Psi}}{Vl}.$$

Enfin le télémètre 2 est capable de mesurer la distance longitudinale Dl de tout obstacle détecté, et de mesurer la vitesse longitudinale relative Vr et la vitesse transversale relative Vt de l'obstacle détecté 17 par rapport au véhicule 1. En comparant la vitesse longitudinale Vl du véhicule 1 mesurée par le capteur 6 et la vitesse longitudinale relative Vr des obstacles, le calculateur 5 mentionné plus haut est donc capable de sélectionner les obstacles fixes, puisque pour ces derniers on a Vr = Vl.

Par ailleurs, on sait que pour ces obstacles fixes, la vitesse de lacet $\psi$ du véhicule est liée avec précision à leur vitesse de défilement ou vitesse transversale Vt par la relation $\dot{\Psi} = \frac{Vt}{Dl}$.

La vitesse de lacet $\dot{\Psi}$ du véhicule peut donc être déterminée par le télémètre avec précision chaque fois qu'un obstacle fixe est détecté, grâce à l'application dans le calculateur 5, de cette relation aux valeurs Dl et Vt mesurées par celui-ci.

De plus, étant donné que la vitesse de lacet $\dot{\Psi}$ du véhicule est liée à la courbure de sa trajectoire $\kappa$ par la relation

$$\kappa = \frac{\dot{\Psi}}{Vl}$$

, il est alors possible de déterminer la valeur exacte de la courbure, soit $\kappa = \frac{Vt}{Dl \times Vl}$.

Lorsque le véhicule 1 est équipé en outre d'un capteur d'angle volant 7 ou d'un gyromètre 8, l'un ou l'autre de ces appareils permet d'évaluer en temps réel la vitesse de lacet du véhicule. Dans la pratique, de telles évaluations s'avèrent trop imprécises pour être appliquées sans correction, au calcul de la trajectoire du véhicule et à la prévision des collisions avec les obstacles survenant dans celle-ci. La présente invention se propose donc de tirer profit des mesures effectuées par le télémètre lors de la détection d'obstacles fixes, pour recaler l'évaluation de la vitesse de lacet fournie par un gyromètre ou un capteur d'angle volant.

Dans le cas d'un gyromètre fournissant directement une évaluation de la vitesse de lacet du véhicule, la correction souhaitée peut s'opérer en recalant les évaluations sur les mesures exactes établies à l'aide du télémètre, lors de la détection d'un obstacle fixe.

Si en revanche, le véhicule 1 est muni d'un capteur d'angle volant, on sait que l'angle volant mesuré $\delta$, est lié à la courbure $\kappa$ par la relation affine $\delta = a\kappa + b$, dans laquelle a dépend de la démultiplication de la direction et de l'empattement du véhicule, et b est un écart à l'origine, fonction de l'erreur introduite par le capteur 7 lui-même, et par les forces transversales (vent, force centrifuge, dévers) subies par le véhicule.

Conformément à l'invention, il est prévu d'évaluer la courbure de la trajectoire $\kappa$ à partir de la mesure $\delta$ du capteur 7 en l'absence d'obstacle fixe, et de recaler ces mesures en recalculant l'écart à l'origine b sur la base de la courbure déterminée par le télémètre lorsqu'un obstacle fixe est détecté. Entre la détection de deux obstacles fixes, la mesure de la courbure $\kappa$ à partir de l'angle volant $\delta$ bénéficie ainsi de la correction apportée à l'écart à l'origine b grâce à la dernière mesure ponctuelle précise de celui-ci, obtenue à l'aide du télémètre.

Pour effectuer les recalages de l'écart d'angle volant b, l'invention propose notamment d'utiliser des méthodes de calcul connues sous le nom de méthodes des moindres carrés, mais il est également possible d'envisager l'application d'autres algorithmes imposant selon une périodicité préétablie, ou uniquement en fonction des obstacles détectés, une correction ou "hybridation" de la valeur de la courbure déterminée par le capteur d'angle volant, ou de la valeur de la vitesse angulaire estimée par le gyromètre, à l'aide des valeurs calculées par le télémètre.

En conclusion, l'invention permet d'obtenir en permanence une mesure de la vitesse de lacet d'un véhicule, suffisamment fiable pour permettre de prévoir les risques de collision du véhicule avec l'ensemble des obstacles présentant un risque de collision. Cette fiabilité repose sur la précision des mesures effectuées par le télémètre sur les obstacles fixes rencontrés, et les corrections apportées aussi souvent que possible aux mesures habituelles de la courbure ou de la vitesse de lacet du véhicule.

**Revendications**

**1.** Procédé de mesure de la vitesse de lacet ($\dot{\psi}$) d'un véhicule (1), **caractérisé en ce que** l'évaluation de la dite vitesse effectuée en permanence par un organe embarqué (2) est recalée ponctuellement à l'aide d'indications Vl, Dl et Vt correspondant respectivement à la vitesse longitudinale du véhicule (1) à sa distance longitudinale par rapport à un obstacle fixe (17) présent sur sa trajectoire, et à la vitesse transversale relative du même obstacle fixe par rapport au véhicule.

**2.** Procédé de mesure selon la revendication 1, **caractérisé en ce que** Dl et Vt sont indiquées par un télémètre à balayage horizontal (2) en cas de détection d'un obstacle fixe sur la trajectoire du véhicule.

**3.** Procédé de mesure selon la revendication 1 ou 2, **caractérisé en ce que** la vitesse de lacet ($\dot{\psi}$) du véhicule (1) est évaluée par un capteur d'angle volant (7).

**4.** Procédé de mesure selon la revendication 1 ou 2, **caractérisé en ce que** la vitesse de lacet ($\dot{\psi}$) du véhicule (1) est évaluée par gyromètre (8) indiquant sa vitesse de lacet instantanée (Vc).

5. Procédé de mesure selon la revendication 1, 2 ou 3, **caractérisée en ce que** les mesures de VI, DI et Vt sont exploitées pour déterminer la courbure de trajectoire κ du véhicule.

6. Procédé de mesure selon la revendication 5, **caractérisée en ce que** la valeur de courbure κ déterminée par les mesures du VI, Di et Vt en cas de détection d'obstacles permet de recaler la valeur de l'écart à l'origine b de l'angle volant δ, dans la relation affine δ = aκ + b, liant ledit angle volant δ à la courbure κ, et au coefficient de démultiplication a, de la direction du véhicule (1).

7. Procédé de mesure selon l'une des revendications précédentes, **caractérisé en ce que** les mesures des VI, DI et Vt sont exploitées pour déterminer la vitesse de lacet ($\dot{\psi}$) du véhicule.

8. Procédé de mesure selon la revendication 6, **caractérisé en ce que** la correction de l'écart à l'origine b de l'angle volant, est effectuée en appliquant la méthode mathématique dite des moindres carrés

**Claims**

1. Method for measuring the speed of lateral motion (ψ) of a vehicle (1) **characterised in that** the evaluation of said speed permanently carried out by on-board equipment (2) is periodically reset with the aid of indications VI, DI and Vt respectively corresponding to the longitudinal speed of the vehicle (1), to its longitudinal distance from a fixed obstacle (17) present on its trajectory, and to the relative transverse speed of the same fixed obstacle with respect to the vehicle.

2. Method for measuring according to claim 1, **characterised in that** DI and Vt are indicated by a horizontal sweep rangefinder (2) in the case of detection of a fixed obstacle on the vehicle trajectory.

3. Method for measuring according to claim 1 or 2, **characterised in that** the speed of lateral motion ($\dot{\psi}$) of the vehicle (1) is evaluated by a steering wheel angle sensor (7).

4. Method for measuring according to claim 1 or 2, **characterised in that** the speed of lateral motion ($\dot{\psi}$) of the vehicle (1) is evaluated by a gyrometer (8) indicating its current speed of lateral motion rate (Vc).

5. Method for measuring according to claim 1, 2 or 3, **characterised in that** the measurements of VI, DI

and Vt are employed in order to determine the curvature of the trajectory κ of the vehicle.

6. Method for measuring according to claim 5, **characterised in that** the curvature value κ determined by the measurements of VI, Di and Vt in the case of detection of obstacles allows resetting of the value of the deviation of the steering wheel angle δ from the point of origin b, in the affine relationship δ= ακ + b, linking said steering wheel angle δ to the curvature κ, and to the demultiplication coefficient α, of the direction of the vehicle (1).

7. Method for measuring according to one of the preceding claims, **characterised in that** the measurements of VI, DI and Vt are employed in order to determine the speed of lateral motion (ψ) of the vehicle.

8. Method for measuring according to claim 6, **characterised in that** correction of the deviation of the steering wheel angle from the point of origin b is done by applying the mathematical method known as least error squares.

**Patentansprüche**

1. Verfahren zur Messung der Giergeschwindigkeit $\dot{\Psi}$ eines Fahrzeuges (1 **dadurch gekennzeichnet, dass** die von einem mitgeführten Bauteil (2) durchgeführte permanente Berechnung dieser Geschwindigkeit zu bestimmten Zeitpunkten wiederholt wird mittels Informationen VI, DI und Vt, die der Geschwindigkeit in Längsrichtung des Fahrzeuges (1), seinem Abstand in Längsrichtung von einem festen Hindernis (17) in seiner Fahrrichtung bzw. der Relativgeschwindigkeit in Querrichtung des gleichen festen Hindernisses bezüglich des Fahrzeuges entsprechen.

2. Verfahren zur Messung nach Anspruch 1, **dadurch gekennzeichnet, dass** DI und Vt von einem Telemeter (2) mit horizontaler Abtastung im Fall der Feststellung eines festen Hindernisses in der Fahrrichtung des Fahrzeuges ermittelt werden.

3. Verfahren zur Messung nach Anspruch 1 oder 2, **dadurch gekennzeichnet, dass** die Giergeschwindigkeit $\dot{\Psi}$ des Fahrzeuges (1) von einem Fühler (7) für die Winkelstellung des Lenkrades berechnet wird.

4. Verfahren zur Messung nach einem der Ansprüche 1 oder 2, **dadurch gekennzeichnet, dass** die Giergeschwindigkeit $\Psi$ des Fahrzeuges (1) von einem Gyrometer (8) berechnet wird, das die momentane Giergeschwindigkeit (Vc) anzeigt.

**5.** Verfahren zur Messung nach Anspruch 1, 2 oder 3, **dadurch gekennzeichnet, dass** die Messungen für Vl, Dl und Vt ausgewertet werden um die Krümmung $\kappa$ der Fahrrichtung des Fahrzeuges zu bestimmen.

**6.** Verfahren zur Messung nach Anspruch 5, **dadurch gekennzeichnet, dass** der aus den Messungen für Vl, Dl und Vt bestimmte Wert der Krümmung $\kappa$ im Fall der Feststellung von Hindernissen es ermöglicht, den Wert für die Abweichung b vom ursprünglichen Lenkradwinkel $\delta$ zu wiederholen mittels der affinen Beziehung $\delta = a\kappa + b$, die den Lenkradwinkel $\delta$ mit der Krümmung $\kappa$ verbindet sowie mit dem Koeffizienten a der Lenkuntersetzung des Fahrzeuges (1).

**7.** Verfahren zur Messung nach einem der vorhergehenden Ansprüche, **dadurch gekennzeichnet, dass** die Messungen für Vl, Dl und Vt ausgewertet werden um die Giergeschwindigkeit $\dot{\Psi}$ des Fahrzeuges zu bestimmen.

**8.** Verfahren zur Messung nach Anspruch 6, **dadurch gekennzeichnet, dass** die Korrektur der Abweichung b vom ursprünglichen Lenkradwinkel mittels des mathematischen Verfahrens der kleinsten Quadrate durchgeführt wird.

FIG.1

FIG.2

EP 1 007 976 B1